# EUROPEAN PATENT APPLICATION

(11) **EP 1 833 000 A1**
(43) Date of publication of application: **12.09.2007**
(21) Application number: 06253229.6
(22) Date of filing: 22.06.2006
(51) Int. Cl.: G06K 7/00

(54) **Tag communication device, control device, and tag communication method**

(30) Priority: 06.03.2006 JP 2006059301
(71) Applicant: Fujitsu Ltd., Kawasaki-shi, Kanagawa 211-8588 (JP)
(72) Inventor: Tanaka, Yoshinori c/o Fujitsu Limited, Kawasaki-shi, Kanagawa 211-8588 (JP)
(74) Representative: Cooper-Rolfe, Elizabeth Louise

(57) **Abstract**

The application relates to a tag communication device comprising a no-response detecting unit, an interference channel detecting unit, a post-transmission stop time setting unit, and a transmission control unit. The no-response detecting unit performs carrier sense. Then, after communication on an open channel is started, the no-response detecting unit detects the communication state with the tag. The interference channel detecting unit performs carrier sense on all channels, detects a channel with a high interference level, and outputs the detected channel to an external control device, when the no-response detecting unit detects that the communication state is degraded. The post-transmission stop time setting unit updates and sets the stop time after transmission (Tₛₗₑₑₚ) when an interferer notification, notifying that the tag communication device is an interferer, is given by the control device. The transmission control unit notifies the control device of the channel used at the start of the transmission to the tag. In addition, following the transmission to the tag, the transmission control unit starts the carrier sense after transmission is stopped for the post-transmission stop time (Tₛₗₑₑₚ).

## Description

This application is based upon and claims the benefit of priority from the prior Japanese Patent Application No. 2006-059301, filed on March 6, 2006, the entire contents of which are incorporated herein by reference.

The present invention relates to a tag communication device that performs communication with a radio frequency identification (RFID) tag, a control device, and a tag communication method.

Conventionally, identification of goods and management of physical distribution are conducted using a radio frequency identification (RFID) tag. In the RFID tag, information such as an identification code is recorded, and the RFID tag is attached to goods. An RFID reader/writer communicates such information with the RFID tag using radio waves.

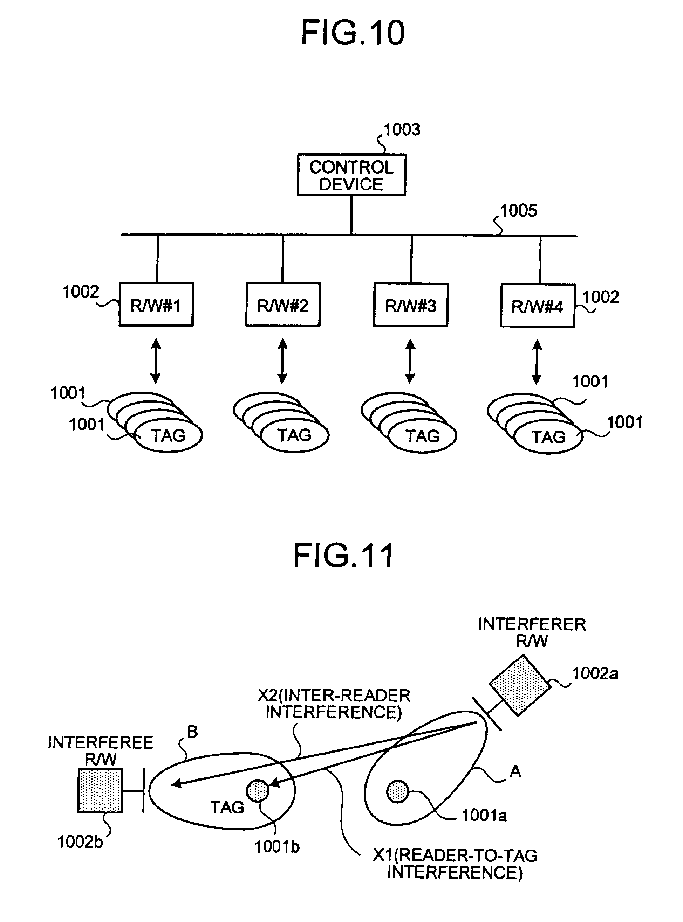

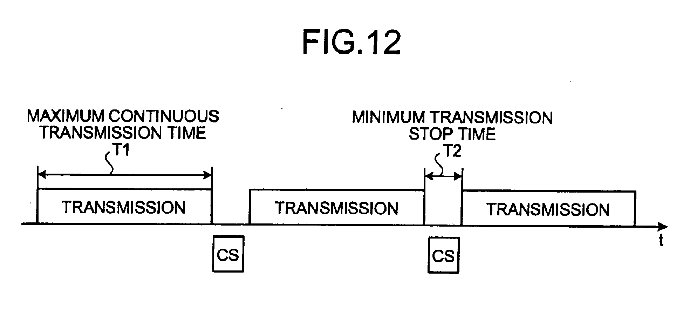

Fig. 10 is a schematic of a configuration of a tag communication system in which plural RFID reader/writers. The RFID tag (hereinafter, "tag") 1001 adhered to goods transmits and receives information to and from the RFID reader and writer (hereinafter, "reader/writer") 1002. The reader/writer 1002 is connected to a control device 1003 via a network 1005, and inputs and outputs information which is communicated with the tag 1001, to and from the control device 1003. In the example shown in Fig. 12, a configuration including plural reader/writers (R/W#1 to R/W#4) 1002 is shown. Each reader/writer 1002 respectively transmits and receives information to and from the tag 1001. The control device 1003 can manage the information of multiple tags 1001.

As technologies related to such reader/writers include a technology for identification information management and carrier sense operations (for example, Japanese Patent Laid-Open Publication No. 2005-229426), an identification technology in a case in which multiple tags are present in a communication region of an interrogator (reader/writer) (for example, Japanese Patent Laid-Open Publication No. 2000-131423), and a technology for preventing mutual interference of radio waves between interrogators (for example, Japanese Patent Laid-Open Publication No. 2004-266550).

Fig. 11 is a schematic for illustrating interference when plural RFID reader/writers are disposed. The communication area of the reader/writer 1002 (1002a and 1002b) is, for example, 3 meters (m) to 4 m. Therefore, as shown in Fig. 13, when plural reader/writers 1002a and 1002b are disposed, the reader/writers are disposed to be separated by a distance equal to or greater than the respective communication areas A and B. Regardless of the communication areas, interference can occur within a range of several kilometers.

A tag 1001a is positioned within the communication area A of the reader/writer 1002a. A tag 1001b is positioned within the communication area B of the reader/writer 1002b. The tag 1001b is focused. The reader/writer 1002a is an interferer that causes interference and the reader/writer 1002b is an interferee that receives interference.

If the reader/writers 1002a and 1002b disposed in close proximity perform transmission at the same time, the tag 1001b receives signals from both the reader/writers 1002a and 1002b. The tag 1001b cannot receive the signal from the reader/writer 1002b normally. Such a reader-to-tag interference is referred to as "tag interference X1". In addition, there is interference between the reader/writers 1002a and 1002b. Such interference is referred to as "inter-reader interference X2". The inter-reader interference can be prevented by changing the frequency (channel) to be used for each reader/writer 1002a and 1002b.

The tag 1001b cannot select a frequency. Therefore, even if each of the reader/writers 1002a and 1002b performs carrier sense and uses different frequencies, the tag 1001b receives the signal from the reader/writer 1002a communicating at a different frequency near the reader/writer 1002b. Thus, the tag interference X1 described above occurs.

As a configuration to prevent the tag interference X1, the control device 1003 performs centralized control of the reader/writers 1002a and 1002b to allow time-division operation, so that the transmissions by the reader/writers 1002a and 1002b do not temporally overlap (for example, Japanese Patent Laid-Open Publication No. H6-290323). However, this technique requires control and settings based on an influence of mutual interference between the reader/writers 1002a and 1002b. Therefore, complicated settings are required every time setting environments of the reader/writers 1002a and 1002b change.

Maximum continuous transmission time from the reader/writer to the tag has recently been regulated (for example, ETS1, EN302 208-1 V1.1.1, September, 2004, p26 to p28). Fig. 14 is a schematic for illustrating explaining the durations of transmission duty and carrier sense (CS). As shown in Fig. 12, the maximum continuous transmission time (T1; for example, 4 seconds) and minimum transmission stop time (T2; for example, 100 milliseconds (ms)) are set as a new regulation. As a result, the reader/writer 1002b awaiting transmission can gain an opportunity to acquire a channel during the minimum transmission stop time T2 of the reader/writer 1002a in use. Thus, the reader/writers 1002a and 1002b can start transmission equally, and at the same time, the inter-reader interference X2 can be prevented.

The prevention of the inter-reader interference X2 by effective use of the new regulation shown in Fig. 12, as well as a reduction in the tag interference X1, and the acquisition of these effects through a simple configuration are desired.

Preferred embodiments of the present invention seek to alleviate the above problems arising in the conventional technologies.

A tag communication device embodying one aspect of the present invention having a predetermined maximum continuous transmission time for one transmission to a tag preferably includes a state detecting unit configured to detect an open channel by carrier sense, and to detect a communication state between the tag communication device and the tag, wherein the communication state starts after transmission using the open channel. The device preferably comprises a channel detecting unit configured to perform carrier sense on all channels used for communication with the tag to detect a channel having a high interference level, and to output interference channel information indicative of detected channel to an external control device following detection by the state detecting unit that the communication state is degraded. Preferably, a time setting unit is provided which is configured to re-set a post-transmission stop time following receipt of an interferer notification from the control device, the interferer notification indicating that the tag communication device is an interferer that causes interference in another device. Preferably a control unit is provided which is configured to notify the control device of a channel used at a time of starting the transmission, to stop transmission to the tag for time equivalent to the post-transmission stop time, and to start the carrier sense after stopping transmission for the time.

A control device embodying another aspect of the present invention is connected to a plurality of other tag communication devices via a network. The control device includes a channel usage table configured to store latest information on a channel notified by each of the tag communication devices, in an association manner with each of the tag communication devices; a determining unit configured to search the channel usage table to determine a tag communication device using a channel causing interference, when interference channel information indicative of a channel having a high interference level is input; and a notifying unit configured to output the interferer notification to determined tag communication device to notify that the determined tag communication device is an interferer.

A method according to still another aspect of the present invention is of tag communication for which maximum continuous transmission time for one transmission to a tag is determined. The method includes detecting an open channel by carrier sense; detecting a communication state between a tag communication device and the tag, the communication state after transmission using the open channel is started; performing carrier sense on all channels used for communication between the tag communication device and the tag to detect a channel having a high interference level; outputting interference channel information indicative of detected channel, to an external control device; re-setting a post-transmission stop time, when the tag communication device receives an interferer notification from the control device, the interferer notification indicating that the tag communication device is an interferer that causes interference in another device; notifying the control device of a channel used at a time of starting the transmission; stopping transmission to the tag from the tag communication device for time equivalent to the post-transmission stop time; and starting the carrier sense after stopping transmission for the time.

Other optional features and advantages of the present invention are specifically set forth in or will become apparent from the following detailed description of the invention when read in conjunction with the accompanying drawings.
Fig. 1 is a schematic of a tag communication device according to a first embodiment of the present invention;
Fig. 2 is a block diagram of a control unit of the tag communication device shown in Fig. 1;
Fig. 3 is a flowchart of a processing by the tag communication device according to the first embodiment;
Fig. 4 is a flowchart of a calculation process for a maximum stop time value at a timeout;
Fig. 5 is a flowchart of an interference channel information notification;
Fig. 6 is a flowchart of a transmission-stop process after communication is started;
Fig. 7 is a flowchart of a processing by a control device;
Fig. 8 is a schematic of a channel usage table provided in the control device;
Fig. 9 is a timing chart for explaining operations of the tag communication device according to the first embodiment;
Fig. 10 is a schematic of a tag communication system in which plural RFID reader/writers are provided;
Fig. 11 is a schematic for illustrating interference when plural RFID reader/writers are disposed; and
Fig. 12 is a schematic for illustrating durations of transmission duty and carrier sense.

Exemplary embodiments according to the present invention will be explained in detail below with reference to the accompanying drawings.

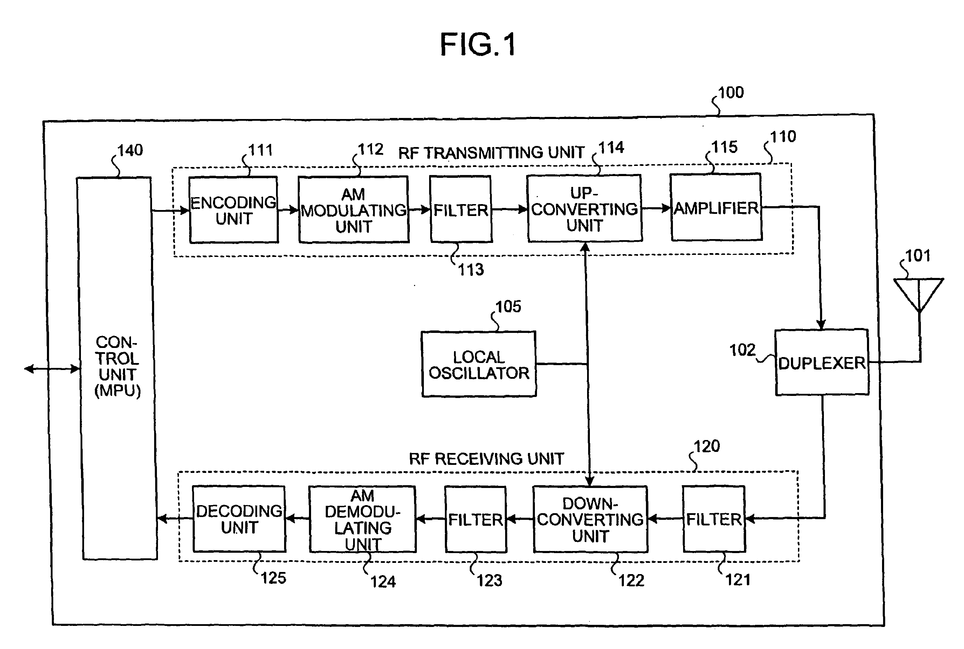

Fig. 1 is a schematic of a tag communication device according to a first embodiment of the present invention. A tag communication device 100 is equivalent to one RFID reader/writer 1002 arranged in the tag communication system (see Fig. 10). In the embodiments of the present invention, plural tag communication devices 100 (RFID reader/writers 1002) are connected to the control device 1003 via the network 1005.

In the tag communication device 100, an RF transmitting unit 110 and an RF receiving unit 120 are respectively connected to an antenna 101, via a duplexer 102. Transmission and reception between the RF transmitting unit 110 and the RF receiving unit 120 and the RFID tag 1001 (see Fig. 10) are controlled by a control unit (microprocessor unit (MPU)) 140.

The RF transmitting unit 110 includes an encoding unit 111 that encodes a transmission signal, an amplitude modulating unit 112 that performs AM modulation on the encoded signal, a filter 113 that filters AM modulated waves, an up-converting unit 114 that converts the frequency of the transmission signal to a wireless frequency bandwidth using an oscillation signal of a local oscillator 105, and an amplifier 115 that performs power amplification on the transmission signal and outputs the amplified signal.

The RF receiving unit 120 includes a filter 121 that filters a reception signal, a down-converting unit 122 that converts the frequency of the reception signal to a frequency bandwidth for signal processing using the oscillation signal of the local oscillator 105, a filter 123 that filters the down-converted reception signal, an AM demodulating unit 124 that performs AM demodulation on the reception signal, and a decoding unit 125 that decodes and outputs the demodulated reception signal.

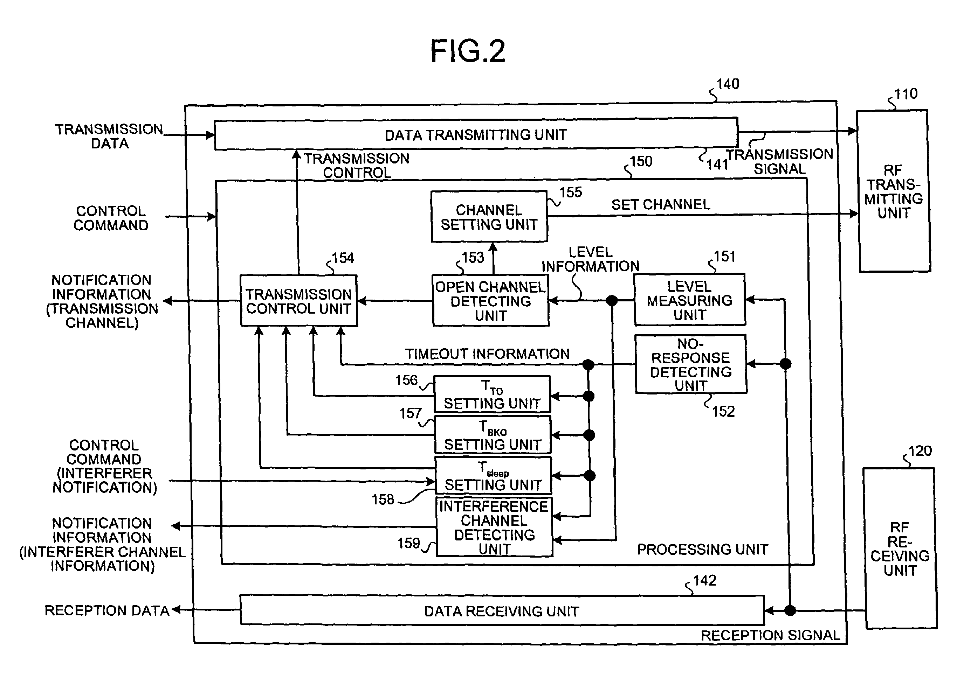

Fig. 2 is a block diagram of the control unit 140. The control unit 140 includes a data transmitting unit 141, a data receiving unit 142, and a processing unit 150. The data transmitting unit 141 outputs input transmission data to the RF transmitting unit 110 (see Fig. 1) as the transmission signal. The transmitting timing of the transmission signal from the data transmitting unit 141 is controlled by the processing unit 150. The data receiving unit 142 outputs the reception signal, output from the RF receiving unit 120 (see Fig. 1), as reception data.

The processing unit 150 includes a level measuring unit 151, a no-response detecting unit 152, an open channel detecting unit 153, a transmission control unit 154, a channel setting unit 155, a time out time (T_{TO}) setting unit 156, a timeout transmission stop time (T_{BKO}) setting unit 157, a post-transmission stop time (Tₛₗₑₑₚ) setting unit 158, and an interference channel detecting unit 159.

The level measuring unit 151 measures the reception power of the reception signal of a certain reception channel output from the RF transmitting unit 120 and outputs the measured channel level information to the open channel detecting unit 153 and the interference channel detecting unit 159. The no-response detecting unit 152 detects no-response duration of the reception signal and outputs the detected no-response duration as timeout information. The degradation of the communication state can be detected not only by the detection of the no-response duration, but also based on transmission errors occurring consecutively for a predetermined period. The timeout information is output to the transmission control unit 154, the timeout time (T_{TO}) setting unit 156, the timeout transmission stop time (T_{BKO}) setting unit 157, the post-transmission stop time (Tₛₗₑₑₚ) setting unit 158, and the interference channel detecting unit 159.

The open channel detecting unit 153 judges an open channel based on the input level information and outputs information on the open channel, which is a result of judgment, to the transmission control unit 154 and the channel setting unit 155. The channel setting unit 155 indicates the set channel by which the transmission signal is transmitted to the RF transmitting unit 110, based on the information on the open channel.

A threshold value used for timeout (set time expired) judgment is set to be updatable in the timeout time (T_{TO}) setting unit 156. A timeout transmission stop time T_{BKO}, used to stop transmission when the timeout time (T_{TO}) set in the timeout time setting unit 156 has expired (timeout), is set to be updatable in the timeout transmission stop time (T_{BKO}) setting unit 157. The timeout transmission stop time T_{BKO} is not limited being set to a certain time, but can also be set to a random time.

A transmission stop time Tₛₗₑₑₚ, used to stop transmission when an interferer notification is input by a control command from outside of the tag communication device 100 (for example, the control device 1003 shown in Fig. 10), is set to be updatable in the post-transmission stop time (Tₛₗₑₑₚ) setting unit 158. The respective setting values of the timeout time (T_{TO}) setting unit 156, the timeout transmission stop time (T_{BKO}) setting unit 157, and the post-transmission stop time (Tₛₗₑₑₚ) setting unit 158 are output to the transmission control unit 154.

The no-response detecting unit 152 and the timeout time (T_{TO}) setting unit 156 constitute a communication state judging unit that judges whether the communication with the tag has degraded. When detected thereby that the communication state with the tag has degraded, the duration of the degradation is measured and whether the timeout (T_{TO}) time has been exceeded is judged. Whether the communication state is degraded can be detected by detecting the timeout after the start of the transmission, as described above. The communication state can be judged to be degraded when an open channel does not appear for time equivalent to the timeout time (T_{TO}).

The interference channel detecting unit 159 is activated when the timeout continues a predetermined number of times (for example, three times) and detects the channel in which interference is occurring, by performing carrier sense on all channels. At this time, the channel with the highest interference level, among the interference levels of respective channels detected by the level measuring unit 151, is detected. Then, information on the channel with the highest interference level is output as notification information to the control device 1003. The notification information includes a device number of the tag communication device 100 and information on the interfering channel.

Information on the open channel output from the open channel detecting unit 153, the timeout information output from the no-response detecting unit 152, the timeout time (T_{TO}) of the timeout time (T_{TO}) setting unit 156, the timeout transmission stop time (T_{BKO}) of the timeout transmission stop time (T_{BKO}) setting unit 157, and the post-transmission stop time (Tₛₗₑₑₚ) of the post-transmission stop time (Tₛₗₑₑₚ) setting unit 158 are input into the transmission control unit 154. The transmission control unit 154 performs transmission control of the transmission signal (transmission timing and channel to be used) to the data transmitting unit 141, based on the information on the open channel, the timeout information, the timeout time (T_{TO}), the timeout transmission stop time (T_{BKO}), and the post-transmission stop time (Tₛₗₑₑₚ). When transmitting the transmission signal from the data transmitting unit 141, the transmission channel used for transmission is output to the control device 1003 as the notification information. The notification information includes the device number of the tag communication device 100 and information on the transmission channel.

The transmission control unit 154 performs control to start transmission from carrier sense after the elapse of the timeout transmission stop time (T_{BKO}), during timeout. When the interferer notification is input from the control device 1003, control is performed, by which transmission is performed after carrier sense is started following the elapse of the post-transmission stop time (Tₛₗₑₑₚ) after one transmission causing the interferer state.

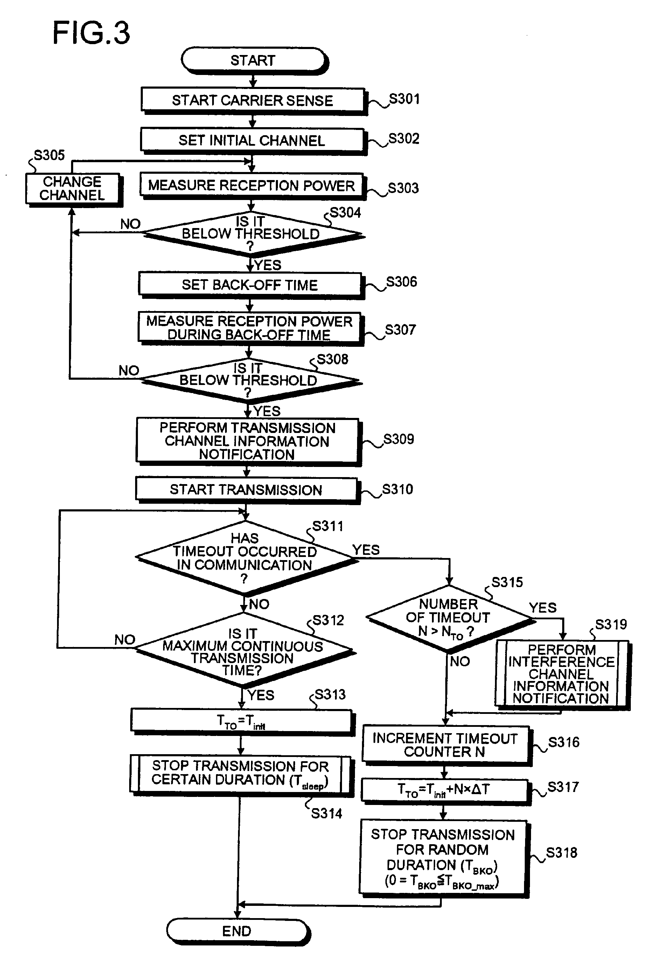

Fig. 3 is a flowchart of a processing by the tag communication device according to the first embodiment. The processing details up until the tag communication device 100 transmits a transmission signal once are shown. Hereafter, explanation is given in correspondence with the configuration shown in Fig. 2.

First, carrier sense is started (step S301), and the channel setting unit 155 performs an initial channel setting (step S302). For example, a channel 1 is set as the initial channel. Next, the reception power of the channel set at step S302 is measured by the level measuring unit 151 (step S303), and the level information is output. The open channel detecting unit 153 compares the reception power included in the level information to the predetermined threshold value (step S304). If the reception power exceeds the threshold value (step S304: NO) the channel is in use, and thus, a channel change is performed (step S305). The processes subsequent to step S303 are performed on the changed channel (for example, a channel 2). The channels are of different frequencies, respectively.

On the other hand, if the reception power is below the threshold value (step S304: YES), first, a back-off time setting for starting transmission after waiting for a predetermined duration, rather than performing transmission immediately after a channel is opened, to prevent simultaneous transmission (collision) by plural reader/writers, is performed (step 5306). The back-off time is within the time range of the minimum transmission stop time T2 shown in Fig. 12 is generated as a random time using a random number (for example, 5 ms). By the setting of the back-off time (random back-off), the reader/writers that are in a state awaiting transmission are prevented from starting transmission simultaneously, and the occurrence of inter-reader interference X2 is prevented.

Next, the level measuring unit 151 measures the reception power within the back-off time (step S307). Then, the open channel detecting unit 153 compares the reception power to the predetermined threshold (step 5308) . If the reception power exceeds the threshold value (step S308: NO), the channel is in use during back-off time and channel change is performed (step S305). The processes subsequent to the step S303 are performed on the changed channel (for example, a channel 3).

On the other hand, if the reception power is below the threshold value (step S308: YES), a state in which transmission of the transmission signal is possible, and thus, information on the transmission channel to transmit the transmission signal is notified to the control device 1003 (see Fig. 10) (step S309), and transmission control of the start of transmission is performed on the data transmitting unit 141. Thus, the data transmitting unit 141 outputs the transmission data to the RF transmitting unit 110 (see Fig. 1) as the transmission signal, and the data transmission is started (step S310).

After the data transmission is started, whether tag interference is occurring is detected. If transmission by another tag communication device is already being performed and the tag interference is occurring (interferee), the tag communication device enters timeout. During timeout, carrier sense is started again after transmission is stopped for a predetermined time (timeout transmission stop time (T_{BKO})) . In this way, the tag communication device 100 has a function in which transmission is temporarily stopped autonomously at timeout due to the tag interference.

Specifically, when the tag interference occurs, there is no response from the tag 1001 or a reception error occurs when a signal is transmitted to the tag 1001. Whether timeout has occurred in communication of the tag communication device is judged (step S311). For example, whether the continuous no-response time or duration of the continuous reception error exceeds the timeout time (T_{TO}) is judged. No-response time is a state in which the tag 1001 does not respond for a predetermined continuous time.

If the tag communication device is not in timeout (step S311: NO), the transmission can be continued for the duration until the maximum continuous transmission time T1 (see Fig. 12). Therefore, whether the transmission time has reached the maximum continuous transmission time T1 is judged (step S312). If the transmission time has not reached the maximum continuous transmission time T1 (step S312: NO), the process returns to step S311 and the transmission of the signal is continued. If the transmission time has reached the maximum continuous transmission time T1 as the result of the judgment (step S312: YES), one transmission from the tag communication device 100 has been performed until the maximum continuous transmission time T1, and thus, after setting the timeout time T_{TO} to the initial value Tᵢₙᵢₜ of the smallest value (step S313), a transmission-stop process of a certain duration (post-transmission stop time: Tₛₗₑₑₚ) is performed (step S314) and the processing of one transmission is completed. Step S314 is a process in which transmission-stop, after the transmission of the transmission signal has started at step S310, is performed. The post-transmission stop time Tₛₗₑₑₚ has a longer time than the minimum transmission stop time T2 (see Fig. 12). The post-transmission stop time Tₛₗₑₑₚ in step S314 is a different value depending on whether the interferer notification has been received.

If the tag communication device is in timeout (when the continuous no-response time or the continuous reception error time exceeds the timeout time T_{TO}) (step S311: YES), the process for transmission-stop during timeout is performed. First, whether the number of timeouts N (for example, N=3), has exceeded a predetermined threshold value N_{TO} is judged (step S315). If the number of timeouts N has not exceeded the threshold value N_{TO} (step S315: NO), the processes at step S316 to step S318 are executed.

First, the timeout counter (number of timeouts) N is incremented (step S316). The timeout time T_{TO} is update-processed (step S317), and the timeout transmission stop time T_{BKO} is set (step S318). Thus, the processing of one transmission is completed. The next transmission starts from the carrier sense (step S301) after the timeout transmission stop time T_{BKO} elapses.

In the processing during timeout at step S316 to step S318, first, the number of timeouts N is incremented at step S316. At step S317, the timeout time T_{TO} is increased so that timeout does not happen easily as the number of timeouts N increase. Specifically, timeout time T_{TO}=initial value Tᵢₙᵢₜ+(number of timeouts Nxincrement value ΔT). The timeout transmission stop time T_{BKO} is not limited to a certain transmission stop time T. In the example described in Fig. 3 (step S318), the timeout transmission stop time T_{BKO} is a random time within the maximum stop time (T_{BKO_max}) (timeout transmission stop time T_{BKO}≤maximum stop time T_{BKO_max}) . Furthermore, the stop time of transmission during the timeout judgment gives priority to the transmission stop by the setting of the timeout transmission stop time (T_{BKO}), regardless of the setting of the post-transmission stop time (Tₛₗₑₑₚ) .

As a result, the value of the timeout time T_{TO} becomes large in the tag communication device 100 with a large number of timeouts, and thus, timeout does not happen as easily compared to the other tag communication devices 100. In addition, because the other tag communication devices 100 stop transmission by timeout, the probability of the tag communication device with a large number of timeouts gaining the opportunity for transmission can be increased.

In the process at step S315, when the number of timeouts N exceeds the threshold value N_{TO} (step S315: YES), the processes subsequent to step S316 are executed after the processing for interference channel information notification to the control device 1003 has been performed (step S319) . The processing at step S319 is based on the problem of interference not being solved solely by the timeout processing in the tag communication device 100 that is the interferee because the number of timeouts N is too large. The control device 1003 is notified of the interference channel information to request control of the tag communication device 100 that is the interferer. The details of the interference channel information notification are explained hereafter.

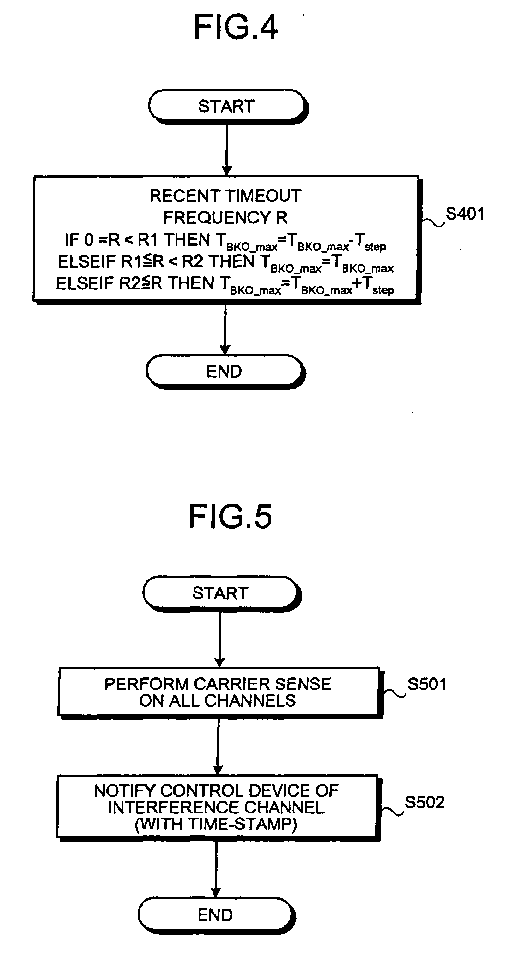

Fig. 4 is a flowchart of a calculation process for the maximum stop time during timeout. The calculation details (step S401) of the maximum stop time T_{BKO_max} at step S318 in Fig. 1 is described. When a recent timeout frequency is R and two differing thresholds set for the frequency R are R1 and R2 (R1<R2), the value of the maximum stop time T_{BKO_max} is calculated by
If 0=R<R1 then T_{BKO_max}=T_{BKO_max}-Tₛₜₑₚ
elseif R1≤R<R2 then T_{BKO_max}=T_{BKO_max}
elseif R2≤R then T_{BKO_max}=T_{BKO_max}+Tₛₜₑₚ
where Tₛₜₑₚ is a variable time of one step. The above-described number of timeouts N can be used as the recent timeout frequency R.

According to the calculation process in Fig. 4, when the timeout frequency R is large, a large value is set as the maximum stop time T_{BKO_max}. When the timeout frequency R is small, a small value is set. As a result, a suitable maximum stop time T_{BKO_max} can be set according to the number of tags within the communication range of the tag communication device 100.

Fig. 5 is a flowchart of the interference channel information notification. The detailed contents described in step S319 in Fig. 3 are shown. The interference channel detecting unit 159 performs carrier sense on all channels used in communication (step 5501). Subsequently, a notification of the interference channel number is given to the control device 1003 (step S502). At this time, the number of the interfering channel is time-stamped with the time at which interference occurred (the time at which the number of timeouts exceeded the threshold value at step S319) and a notification is given thereof.

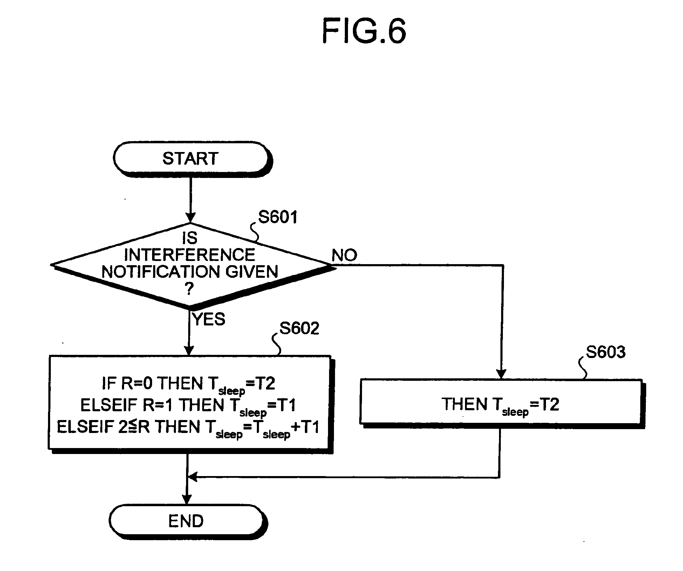

Fig. 6 is a flowchart of a transmission stop process after the start of communication. The detailed contents of that described in step S314 in Fig. 3 are shown. The post-transmission stop time (Tₛₗₑₑₚ) is set to different times based on whether the post-transmission stop time (Tₛₗₑₑₚ) setting unit 158 receives an interferer notification from the control device 1003. In other words, when the transmission signal is transmitted once at step S310 (see Fig. 3) and an interferer to other tag communication devices is generated, the interferer notification is input into the post-transmission stop time (Tₛₗₑₑₚ) setting unit 158 from the control device 1003.

In the process in Fig. 6, first, whether the interferer notification has been given is judged (step S601). If the interferer notification has been given, (step S601: YES), the following process is performed (step 5602) . When the recent timeout frequency (number of times) is R,
If R=1 then Tₛₗₑₑₚ=T2
elseif R=1 then Tₛₗₑₑₚ=T1
elseif 2≤R then Tₛₗₑₑₚ=Tₛₗₑₑₚ+T1
(T1: maximum continuous transmission time; T2: minimum transmission stop time; see Fig. 12)

The post-transmission stop time Tₛₗₑₑₚ can also be set to the value of an integral multiple of the maximum continuous transmission time T1.

At the same time, when there is no interferer notification(step S601: NO), the following process is performed (step 5603).
then Tₛₗₑₑₚ=T2

According to the process in Fig. 6, when there is no interferer notification, namely the interferer to other tag communication devices is not generated during the transmission of the transmission signal, the post-transmission stop time (Tₛₗₑₑₚ) stops transmission for the specified minimum transmission stop time T2. On the other hand, if the interferer notification has been given, namely the interferer to other tag communication devices is generated during the transmission of the transmission signal, processing is divided into 1 and 2, below.
1. When the timeout frequency R is large, the post-transmission stop time (Tₛₗₑₑₚ) is set to a large value. The maximum value is the time in which the maximum continuous transmission time T1 is added to the post-transmission time set by the post-transmission stop time setting unit (Tₛₗₑₑₚ) 158 up until now (Tₛₗₑₑₚ+T1) .
2. When the timeout frequency R is small, the post-transmission time (Tₛₗₑₑₚ) is set to a small value. As a result, the post-transmission stop time (Tₛₗₑₑₚ) corresponding to the degree by which the interference occurs (tag interference) due to the number of tags within the communication range of the tag communication device 100, etc. can be set.

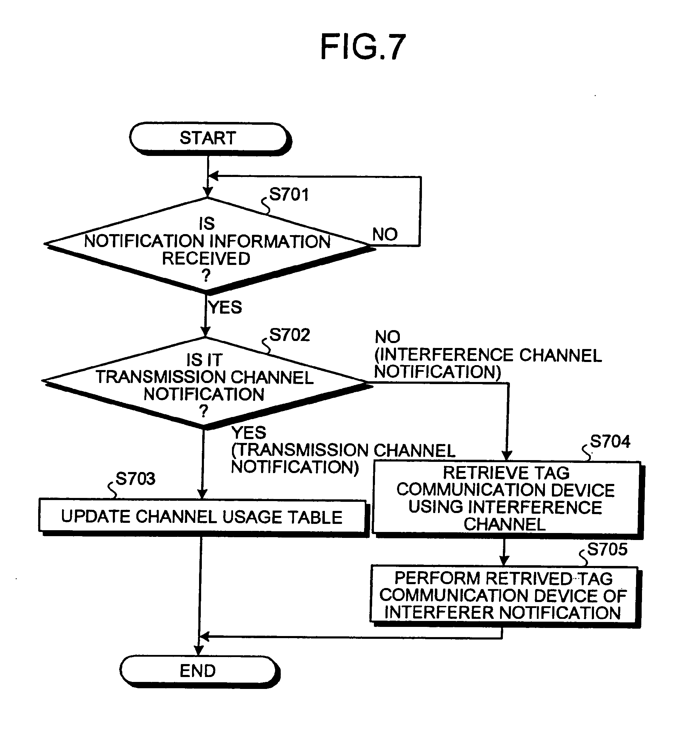

Fig. 7 is a flowchart of a processing by the control device. The processing details in the control device 1003 shown in Fig. 10 are described. The control device 1003 waits for the reception of the notification information from a plurality of tag communication devices 100 (step S701: NO). When the notification information is received (step S701: YES), the content of the notification information is judged. If the content of the notification information is the transmission channel notification (step S702: YES), the channel usage table is updated (step S703) and the process is completed. Subsequently, the processes following the step S701 are executed again.

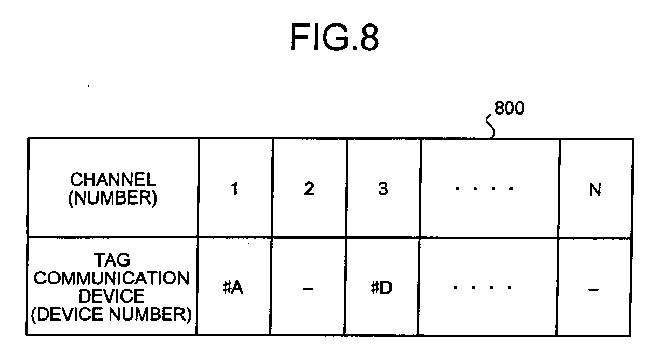

Fig. 8 is a schematic of a channel usage table provided in the control device. In a channel usage table 800, a list of channels (channel number: 1 to N) and the tag device 100 (device number: #1, 2, ...) using each channel are coordinated, updated and stored. In the example shown in Fig. 8, channel 1 is used by a tag communication device 100 #A, channel 2 is an open channel, and channel 3 is used by a tag communication device 100 #D. In the channel usage table 800, an updating unit (not shown) updates the data of the relevant channel by the transmission channel and the device number included in the notification information transmitted from the tag communication device 100, by the process shown in step S703 in Fig. 7.

Returning to Fig. 7, if the content of the notification information is the interference channel notification (step S702: NO), a retrieving unit (not shown) performs retrieval of the tag communication device 100 using the interference channel (step S704). Specifically, the channel usage table 800 shown in Fig. 8 is referenced by the interference channel notification. Then, based on the time-stamp information, the tag communication device (device number) using the interference channel at that time is retrieved. Then, a notifying unit (not shown) gives interferer notification to the retrieved tag communication device 100 by the control command (step S705) and the process is completed. Subsequently, the processes following step S701 are executed again.

The tag communication device 100 according to the configuration above is configured to enter timeout and autonomously stop transmission by the occurrence of tag interference when other tag communication devices communicate simultaneously, when there is no response from the tag. However, if the configuration is that in which transmission is only stopped, there is a risk that the communication is never performed. Thus, as described above, the timeout time T_{TO} is changed to increase according to the frequency of the timeout. As a result, when a transmission cannot be performed continuously, the value of the timeout time T_{TO} increases (timeout does not happen easily), and the probability of the next and subsequent transmissions being stopped decreases (transmission priority level is increased). On the other hand, if it reaches the maximum continuous transmission time T1 for even once in transmission, the timeout time T_{TO} is returned to the initial value Tᵢₙᵢₜ, which is the minimum value (timeout happens easily), and the probability of the next and subsequent transmissions being stopped increases (transmission priority level is lowered).

Furthermore, the configuration is that in which, when the timeout continues more than a predetermined number of times, the control device 1003 is notified of the interference channel information. The interferer notification is given to the interferer tag communication device 100, via the control device 1003. The tag communication device 100 that received the interferer notification changes the post-transmission stop time Tₛₗₑₑₚ according to the timeout frequency. Thus, the post-transmission stop time Tₛₗₑₑₚ corresponding to the degree by which interference (tag interference) occurs due to the number of tags within the communication range of the tag communication device 100 can be set.

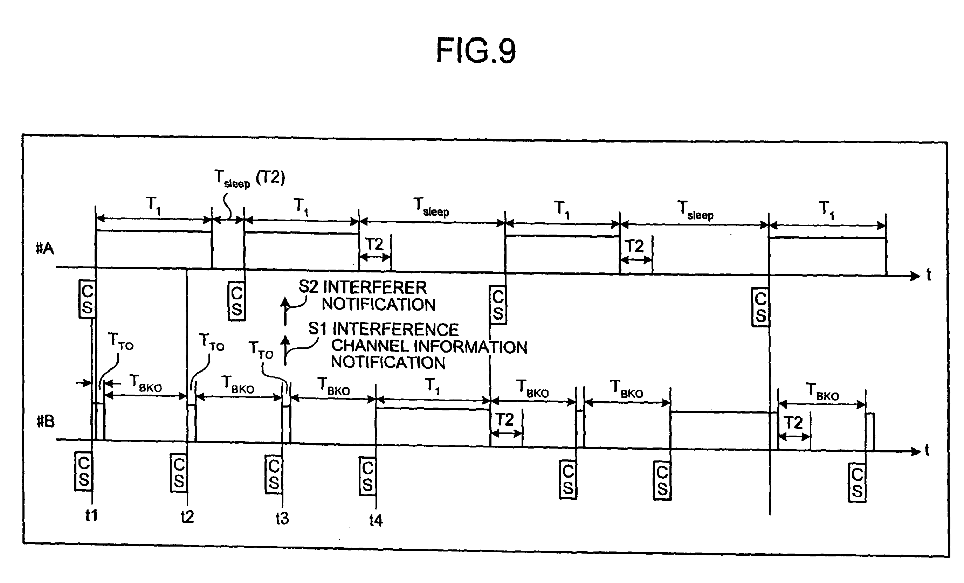

Fig. 9 is a timing chart for explaining operations of the tag communication device according to the first embodiment. Fig. 9 illustrates an operation example of when two tag communication devices #A and #B are operating. The two tag communication devices #A and #B, provided near each other, perform communication with the tag using different frequencies, respectively. Furthermore, the two tag communication devices #A and #B are presumed to have a configuration in which both perform carrier sense asynchronously.

At time t1, the tag communication device #A and the tag communication device #B respectively perform carrier sense. The tag communication device #A acquires a channel and starts transmission. The tag communication device #B enters timeout by the timeout time T_{TO} and transmission stops for the timeout transmission stop time T_{BKO}. At time t2, the tag communication device #B attempts to start communication again after performing carrier sense. However, the tag communication device #A is already in communication and the tag communication device #B enters timeout again. The tag communication device #A starts transmission again after the elapse of the post-transmission stop time (Tₛₗₑₑₚ). The post-transmission stop time (Tₛₗₑₑₚ) is a time longer than the minimum transmission time T2.

At time t3, the tag communication device #B attempts transmission after performing carrier sense, but enters timeout for a third time. At this time, the number of timeouts N of the tag communication device #B, which is the interferee, has exceeded the predetermined threshold N_{TO} (in this case, N_{TO}=3), and thus, the control device 1003 is notified of interference channel information S1. The control device 1003 notifies the tag communication device #A, which is the interferer, of interferer notification S2 using the channel use state table 800, described above. The tag communication device #A that received the interferer notification S2 sets the post-transmission stop time (Tₛₗₑₑₚ) to be long due to the interferer notification S2.

In the example shown in Fig. 9, the duration exceeds the minimum transmission stop time T2, and according to the processing at step S602 in Fig. 6, the transmission is stopped for the total duration of the maximum continuous transmission time T1 added to the value of the post-transmission stop time (Tₛₗₑₑₚ) set in the post-transmission stop time (Tₛₗₑₑₚ) setting unit 158 as the post-transmission stop time (maximum post-transmission stop time T ₛₗₑₑₚ=Tₛₗₑₑₚ+T2). Therefore, the duration in which the tag communication device #A of the interferer side stops the transmission increases, and the opportunity for the tag communication device #B of the interferee side to start communication can be increased. At least the next transmission from the tag communication device #A, to which the interferer notification has been given, is stopped and the tag communication device #A enters an intermittent transmission state in which the next transmission is stopped for every interferer notification S2 given.

At time t4, the post-transmission stop time (Tₛₗₑₑₚ) of the tag communication device #A is large, and thus, the communication of the tag communication device #B can be started while the transmission of the tag communication device #A is stopped.

In the tag communication devices according to the configuration above, the value of the timeout time T_{TO} gradually increases as the number of no-responses from the tag increases, and the priority level at which the next transmission can be started can be increased, respectively. In addition, when the transmission is started, the value of the timeout time T_{TO} is lowered to the initial value and the priority levels for transmission by the other tag communication devices are lowered. Thus, the tag communication devices can equally perform the opportunity for communication with the tag, respectively.

In the embodiment described above, the interferer notification output from the tag communication device is configured so that notification is given to the tag communication device on the interferer side, via the control device, from the tag communication device on the interferee side. The configuration is not limited thereto, and can be a configuration in which a main tag communication device having the functions provided in the control device (the process shown in Fig. 7 and the channel usage table shown in Fig. 8) is provided and other tag communication devices exchange notification information (transmission channel and interference channel information) with the main tag communication device. In this case, the incorporation of the control device is unnecessary.

The control procedure explained above can be realized by execution of a program prepared in advance by a computer, such as a personal computer, and a work station. The program is stored on a computer-readable recording medium, such as a hard disk, a flexible disk, a compact-disc read-only memory (CD-ROM), a magneto optical (MO) disk, a digital versatile disc (DVD), etc., and is executed by being read from the recording medium by the computer. In addition, the program can be a transmission medium that can be distributed via a network, such as the Internet.

According to the embodiments described above, it is possible to reduce interference. Moreover, it is possible to make a system adoptable to an increase in the number of devices and arrangement without enlarging the system.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A tag communication device for which maximum continuous transmission time for one transmission to a tag is determined, the tag communication device comprising:
a state detecting unit configured to detect an open channel by carrier sense, and to detect a communication state between the tag communication device and the tag, the communication state after transmission using the open channel is started;
a channel detecting unit configured to perform carrier sense on all channels used for communication with the tag to detect a channel having a high interference level, and to output interference channel information indicative of detected channel, to an external control device, when the state detecting unit detects that the communication state is degraded;
a time setting unit configured to re-set a post-transmission stop time, when an interferer notification is received from the control device, the interferer notification indicating that the tag communication device is an interferer that causes interference in another device; and
a control unit configured to notify the control device of a channel used at a time of starting the transmission, to stop transmission to the tag for time equivalent to the post-transmission stop time, and to start the carrier sense after stopping transmission for the time.

2. The tag communication device according to claim 1, wherein the state detecting unit is configured to detect that the communication is degraded when there is no response from the tag for a predetermined time, and to detect that the communication is degraded when transmission errors continue for a predetermined period.

3. The tag communication device according to claim 1, wherein the state detecting unit is configured to detect that the communication state is degraded when a timeout continuously occurs a predetermined number of times, the timeout in a state in which communication with the tag is impossible to be started, and/or to detect that the communication state is degraded when an open channel is not detected for a predetermined duration.

4. The tag communication device according to claim 1, 2 or 3, wherein the channel detecting unit is configured to perform the carrier sense on all channels and to output the interference channel information, when number of occurrence of a timeout exceeds a threshold, the timeout in a state in which communication with the tag is impossible to be started due to degradation of the communication state.

5. The tag communication device according to any preceding claim, wherein
the control unit is configured to stop transmission to the tag for a time equivalent to the post-transmission stop time, upon completion of transmission to the tag, the transmission having duration shorter than a maximum continuous transmission time, and
the post-transmission stop time has a time length equal to or more than a minimum transmission stop time.

6. The tag communication device according to claim 5, wherein the time setting unit is configured to re-set the post-transmission stop time to a time equal to or more than the maximum continuous transmission time when the interferer notification is received.

7. The tag communication device according to any preceding claim, further comprising a judging unit configured to judge, when the detecting unit detects that the communication state is degraded, whether a timeout has occurred by determining whether a predetermined timeout time has elapsed while the communication state is degraded, wherein
the control unit is configured to start, when the judging unit judges that the timeout has occurred, the carrier sense after transmission to the tag is stopped for a timeout stop time.

8. The tag communication unit according to claim 7, wherein the control unit is configured to start the carrier sense after the transmission is stopped for the timeout stop time, not for the post-transmission stop time, when the judging unit judges that the timeout has occurred.

9. The tag communication device according to claim 7, wherein the judging unit is configured to set the timeout time based on the communication state and a transmission priority level.

10. The tag communication device according to claim 9, wherein the judging unit is configured to set the timeout time and the transmission priority level, such that the timeout time is longer and the transmission priority level is higher as frequency of the timeout increases.

11. The tag communication device according to claim 7, wherein the control unit is configured to set a random value to the timeout stop time, the random number being smaller than a predetermined maximum value.

12. The tag communication device according to claim 11, wherein the control unit is configured to set the maximum value according to recent frequency of the timeout.

13. The tag communication device according to any preceding claim, wherein the tag communication device is connected to a plurality of other tag communication devices via a network, the tag communication device further comprising:
a channel usage table configured to store latest information on a channel notified by each of the other tag communication devices, in an associated manner with each of the other tag communication devices;
a determining unit configured to search the channel usage table to determine a tag communication device using a channel causing interference, when the interference channel information is input; and
a notifying unit configured to output the interferer notification to determined tag communication device to notify that the determined tag communication device is an interferer.

14. A control device connected to a plurality of other tag communication devices via a network, comprising:
a channel usage table configured to store latest information on a channel notified by each of the tag communication devices, in an association manner with each of the tag communication devices;
a determining unit configured to search the channel usage table to determine a tag communication device using a channel causing interference, when interference channel information indicative of a channel having a high interference level is input; and
a notifying unit configured to output the interferer notification to determined tag communication device to notify that the determined tag communication device is an interferer.

15. A method of tag communication for which maximum continuous transmission time for one transmission to a tag is determined, the method comprising:
detecting an open channel by carrier sense;
detecting a communication state between a tag communication device and the tag, the communication state after transmission using the open channel is started;
performing carrier sense on all channels used for communication between the tag communication device and the tag to detect a channel having a high interference level;
outputting interference channel information indicative of detected channel, to an external control device;
re-setting a post-transmission stop time, when the tag communication device receives an interferer notification from the control device, the interferer notification indicating that the tag communication device is an interferer that causes interference in another device;
notifying the control device of a channel used at a time of starting the transmission;
stopping transmission to the tag from the tag communication device for time equivalent to the post-transmission stop time; and
starting the carrier sense after stopping transmission for the time.
